# EUROPEAN PATENT SPECIFICATION

(11) **EP 3 295 798 B1**
(45) Date of publication and mention of the grant of the patent: **05.02.2020**
(21) Application number: 17001510.1
(22) Date of filing: 08.09.2017
(51) Int. Cl.: A01N 59/20, A01N 25/04

(54) **HIGH EFFECTIVENESS LIQUID FORMULATION OF BORDEAUX MIXTURE**
FLÜSSIGFORMULIERUNG VON BORDEAUX-BRÜHE MIT HOHER EFFEKTIVITÄT
FORMULATION LIQUIDE À HAUTE EFFICACITÉ DE MÉLANGE DE BORDEAUX

(30) Priority: 14.09.2016 IT 201600092692
(43) Date of publication of application: 21.03.2018
(73) Proprietor: MANICA S.p.A., 38068 Rovereto (Trento) (IT)
(72) Inventor: Manica, Michele, 38068 Rovereto (TN) (IT)
(74) Representative: Pipparelli, Claudio

(56) References cited:
- WO-A1-2007/107802
- US-A- 3 024 161
- US-A- 5 958 438
- US-A1- 2007 003 635
- PÉREZ-RODRÍGUEZ P ET AL: "Modeling losses of copper-based fungicide foliar sprays in wash-off under simulated rain", INTERNATIONAL JOURNAL OF ENVIRONMENTAL SCIENCE AND TECHNOLOGY, CENTER FOR ENVIRONMENT AND ENERGY RESEARCH AND STUDIES (C E E R S), IR, vol. 12, no. 2, 14 December 2013 (2013-12-14), pages 661-672, XP035423149, ISSN: 1735-1472, DOI: 10.1007/S13762-013-0445-3 [retrieved on 2013-12-14]
- Mary Concklin: "Considerations for Copper Sprays in Tree Fruits", , 3 April 2013 (2013-04-03), pages 1-2, XP055296408, Retrieved from the Internet: URL:http://ipm.uconn.edu/documents/raw2/31 0/Considerations for Copper Sprays in Tree Fruits April 3 2013.pdf [retrieved on 2016-08-18]
- .: "POLTIGLIA DISPERSS", , 6 March 2006 (2006-03-06), pages 1-18, XP055351302, Italy Retrieved from the Internet: URL:http://agroambiente.info.arsia.toscana .it/docs/ajax/l34/Poltiglia Disperss 2.pdf [retrieved on 2017-03-03]
- .: "MSDS: Cuprofix Ultra 40 Disperss", , 22 December 2010 (2010-12-22), pages 1-9, XP055510398, King of Prussia, PA, U.S.A. Retrieved from the Internet: URL:https://kernred.co.kern.ca.us/kern-agc omm/products/CUPROFIX%20ULTRA%2040%20DISPE RSS.pdf [retrieved on 2018-09-27]
- Dave Rosenberger: "What Copper Formulations are Best for Tree Fruit Applications?", 2012 Mid-Atlantic Fruit and Vegetable Convention, 1 February 2012 (2012-02-01), pages 1-21, XP055510567, Hershey, PA, U.S.A. Retrieved from the Internet: URL:http://shaponline.org/wp-content/uploa ds/2012/03/Rsnbrgr-Wed-945am-copper.pdf [retrieved on 2018-09-27]
- E Somers: "THE PREPARATION OF BORDEAUX MIXTURE", J. Sci. Food Agric., vol. 10, no. 1, 10 January 1959 (1959-01-10), pages 68-72, XP055510674,
- R H Robinson: "Preparation of Bordeaux Mixture", Extension Bulletin 667, 1 June 1946 (1946-06-01), pages 1-2, XP55583124, Oregon State College, Corvallis, U.S.A. Retrieved from the Internet: URL:https://ir.library.oregonstate.edu/dow nloads/8336h5652 [retrieved on 2019-04-24]
- Wolfgang Blass: "Kupferkalkbrühe (Bordeauxbrühe)", ROEMPP Chemielexikon Online, 1 June 2004 (2004-06-01), pages 1-1, XP55583133, Stuttgart, Germany Retrieved from the Internet: URL:https://roempp.thieme.de/roempp4.0/do/ data/RD-11-02442 [retrieved on 2019-04-24]
- Cerexagri: "Poltiglia Disperss: rame prezioso per colture preziose", Agronotizie, 8 April 2014 (2014-04-08), pages 1-3, XP55583434, Italy Retrieved from the Internet: URL:https://agronotizie.imagelinenetwork.c om/difesa-e-diserbo/2014/04/08/poltiglia- disperss-rame-prezioso-per-colture-prezios e/37442 [retrieved on 2019-04-25]

## Description

The present invention concerns a copper-based fungicide composition formulated as a concentrated water suspension, more specifically a Bordeaux mixture in a concentrated water suspension.

The present invention also concerns preparation of the above-mentioned concentrated water suspension and its use thereof as a crop protection product as established by the EU regulations.

Bordeaux mixture is a well-known copper-based contact fungicide, with preventive action, used as a fungicide in agriculture. It has the general formula CuSO₄·3Cu(OH)₂·3CaSO₄·2H₂O and is prepared by neutralization of pentahydrate copper sulphate with calcium hydroxide. The neutralization is necessary to remedy the phytotoxicity of the pure copper sulphate.

The current European legislation aims to reduce the quantities of all copper fungicides, and therefore also Bordeaux mixture, used in agriculture.

The need is therefore felt for a more effective Bordeaux mixture with respect to the products currently on the market. By the term "more effective" we mean a Bordeaux mixture capable of providing at least the same effects as a Bordeaux mixture of the prior art, even if used in a lower quantity.

US 5 958 438 A (Courtade Michael et al., 1999) discloses a Bordeaux mixture wherein the copper phase mainly consists of brochantite and wherein the calcium phase is mainly gypsum. This document does not disclose an aqueous dispersion where the mean diameter of the particles is from 1.3 µm to 1.7 µm.

"Poltiglia Disperss", 6 March 2006, pages 1-18, discloses water dispersible granules of the Bordeaux mixture product Disperss® WG. The particle size is of a fine and homogenous nature, comprising particles of from 1.5 to 1.8 µm, but a particle size distribution is not given.

The non-patent document :Cerexagri: "Poltiglia Disperss: rame prezioso per colture preziose, Agronotizie, 8 April 2014, https://agronotizie.imagelinenetwork.com/ difesa-e-diserbo/2014/04/08/poltiglia-disperss-rame-prezioso-per-colture-preziose/37442, Italy, discloses that copper is totally present as hydroxysulphate (or brochantite) according to the process provided by US 5,958,438.

It is also known that Bordeaux mixture is currently sold as a crop protection product in the form of a wettable powder or hydrodispersible granules which are diluted at the moment of use. This dilution has the drawback of being a lengthy procedure since the final water dispersion must be uniform and free from lumps. A further drawback of the known art consists in the fact that during metering of Bordeaux mixture-based products in powder or in hydrodispersible granules, inhalable dust can be released which can cause problems.

Lastly, the main agronomic drawback of Bordeaux mixture-based products in powder and in hydrodispersible granules is that, once diluted in water, they are characterized by the presence of particles having a diameter up to 10-40 µm. The above-mentioned dimensions negatively affect the capability of the water suspension, prepared by the farmer, to effectively cover the vegetable surface of the plants guaranteeing the necessary coverage for protection against the most common fungi and bacteria. This means that said products, in powder or hydrodispersible granules, have to be used at high doses.

All these drawbacks are overcome by the Bordeaux mixture-based formulation in concentrated suspension of the present invention.

In fact, the present invention concerns a water dispersion comprising Bordeaux mixture characterized by a copper content from 50 to 200 g/litre, preferably 100 to 150 g/litre, even more preferably 124 g/litre, and a particle size distribution such that:
(i) 99.99% of the particles have a mean diameter smaller than 10 µm;
(ii) the mean diameter, relative to all the particles, ranges from 1.3 to 1.7 µm.

The greater fineness of the particles of Bordeaux mixture of the present invention with respect to the known art guarantees a greater specific surface of the solid in suspension and therefore increases its effectiveness in the field, guaranteeing greater product coverage. Furthermore, the water dispersion is more stable, thus allowing marketing of the concentrated dispersion of Bordeaux mixture.

The water dispersion of the present invention can further comprise dispersing agents, in particular sodium or ammonium polynaphthalene sulfonate and lignosulfonate, and relative mixtures, from 2% by weight to 10% by weight, preferably 4% by weight to 8% by weight, viscosity regulators like xanthan gum from 0 to 10 g/L, preferably 1 to 6 g/L in order to obtain the desired viscosity, usually 500 to 2000 cP, preferably 700 to 1200 cP. Alternatively to the xanthan gum, carboxymethyl cellulose can be used as a viscosity regulator.

In order to improve the behaviour of the dispersion of the present invention, above all to counter gravity sedimentation, it can also contain bentonite or attapulgite. These substances can be present in a quantity from 0 to 6% by weight, preferably from 0.3 to 3% by weight with respect to the dispersion. Lastly the water dispersion of the present invention can also comprise lesser quantities of chemical compounds used during the preparation thereof, for example surface-active agents and anti-foaming agents.

The dispersion of the present invention offers considerable advantages during preparation of the mixtures in the atomizers; in fact, it is possible to carry out treatments with latest-generation machines with reduced spray volumes and at copper concentrations 4-5 times higher.

Table 1 below shows the tests of effectiveness in the field performed in order to register the product as a crop protection product in accordance with the EU regulations.

**Table 1**

| Crop | No. of tests performed | Dosage (litres/hectare) | Type of disease controlled |
|---|---|---|---|
| Actinidia (kiwi) | 8 | 2.5-10 | Bacteriosis |
| Pomes (apple and pear) | 11 | 2-10 | Scab, canker |
| Asparagus | 2 | 3.2-8 | Stemphylium |
| Artichoke | 2 | 4-8 | Blight |
| Legumes | 4 | 3.2-8 | Rust |
| Small fruit | 10 | 2-10 | Pitting |
| Carrot | 6 | 4-8 | Alternaria |
| Cabbage | 6 | 4-10 | Alternaria |
| Citrus fruit | 6 | 4-10 | Phytophtora |
| Leaf vegetables | 6 | 3.2-8 | Blight |
| Vine | 17 | 4-10 | Blight |
| Nuts | 3 | 8-12 | Bacteriosis |
| Cucurbits (melon, cucumber, courgette, water melon) | 14 | 4-8 | Blight |
| Olive | 9 | 7.2-12 | Peacock spot |
| Onion | 6 | 4-8 | Blight |
| Drupes (peach, cherry) | 16 | 2-12 | Leaf curl, coryneum and bacteriosis |

The present invention also concerns the process for preparing the dispersion of Bordeaux mixture described above.

In accordance with this, the present invention concerns preparation of the water dispersion as described above which comprises the following stages:
a) preparation of a water solution of copper sulphate pentahydrate CuSO₄·5H₂O;
b) neutralization of the water solution of copper sulphate pentahydrate with aqueous calcium hydroxide up to a pH of 4.1-4.4, preferably 4.2-4.3, thus obtaining a dispersion of Bordeaux mixture in water;
c) filtering of the dispersion of Bordeaux mixture of stage (b) and obtainment of a wet filter cake of Bordeaux mixture;
d) addition to the wet filter cake of stage (c) of one or more dispersing agents and homogenization of the dispersion thus obtained;
e) wet milling of the filter cake with the addition of the dispersing agents obtained in stage (d) until:
   (i) 99.99% of the particles have a mean diameter equal to or smaller than 10 µm;
   (ii) the mean diameter, relative to all the particles, ranges from 1.3 to 1.7 µm. The process of the present invention is preferably carried out at a temperature from 40 to 60°C during synthesis of the Bordeaux mixture.

In the preferred embodiment, the wet filter cake obtained in stage (c) has a composition of approximately 60% solid and 40% water.

The homogenization stage (d) usually lasts 10 to 40 minutes.

In stage (a), the solution of pentahydrate copper sulphate will be indicatively 10 to 20% by weight, and the lime solution will be indicatively 15 to 25% by weight.

In stage (b) it is preferable to check that the pH is stable for a period of at least 1-3 hours.

The dispersants added in stage (d) can be non-ionic, cationic and anionic.

The best known and most widely used water dispersants used in stage (d) are salts of sodium and ammonium polynaphthalene sulfonates and lignosulfonates. They are usually added to the dispersion in a quantity from 2 to 10% by weight, preferably 4 to 8% by weight. In this stage other additives can be added, for example viscosizing agents, viscosity regulators, surface-active agents, in any case additives able to improve the dispersion in terms of homogeneity, stability and viscosity.

In fact in stage (d) other additives can be added to the water dispersion such as xanthan gum, with concentrations from 0 to 10 g/L, preferably 1-6 g/L, or equivalent products chemically modified, in order to obtain the desired viscosity, the latter being preferably 500-2000 cP, even more preferably 700 to 1200 cP. Alternatively carboxymethyl cellulose can be used as a rheological modifier. Again in stage (d) bentonite or attapulgite can be added to improve the behaviour of the product, especially to counter gravity sedimentation of the suspension. These substances can be added in a quantity of 0-6% by weight with respect to the dispersion, preferably 0.3 to 3%.

Lastly, the suspension can contain antifoaming substances, for example based on polydimethylsiloxanes.

The homogenization is facilitated by the use of suitable equipment, for example fast agitators provided with impact/cutting blade. Between stage (b) and stage (c) an optional filtering can be performed to eliminate any impurities present in dispersion.

A characterizing stage of the process of the present invention is the stage of wet milling (e), in which the homogenized dispersion undergoes milling, preferably with a microsphere mill, with consequent reduction in the dimensions of the solid particles. In the preferred embodiment, said microspheres can be made of ceramic or glass. The milling can be performed in a continuous mill via the use of a feed pump, or in batch discontinuous mode transferring the entire suspension into the mill and milling it. The grinding must be performed until obtaining the desired particle size distribution defined above.

Lastly, the present invention concerns the non-therapeutic use of the water dispersion of Bordeaux mixture to combat:
scab, canker, Stemphylium, blight, rust, pitting, Alternaria, Phytophtora, bacteriosis, peacock spot, leaf curl and Coryneum.

The dosage selected to control the above diseases is approximately 2 to approximately 12 litres/hectare of dispersion of the present invention containing 124 g/L of Bordeaux mixture copper.

The examples below are provided for a better understanding of the present invention.

### Example 1 - Preparation of the composition of the present invention

1 kg of water solution with 15% by weight of pentahydrate copper sulphate CuSO₄·5H₂O are placed in a cylindrically shaped vertical reactor with working volume of 2 litres, including the conical bottom with internal angle of 120°. This reactor is stirred by means of a turbine having a diameter equal to 15% of the cylindrical diameter, with an agitation speed of 90 r.p.m.

The conical bottom is provided with a product withdrawal point where a peristaltic pump is located which recirculates the liquid in the upper part of the reactor with a flow rate of 1 litre/hour to prevent sedimentation at the tip of the cone. Limewash with 20% Ca(OH)₂, prepared by dispersing solid slaked lime in water, is slowly added to the above system as described. The reaction is carried out until the pH stabilizes at approximately 4.1-4.4, preferably 4.2-4.3. This pH value must be stable for at least 2.5 hours.

The reaction process temperature is kept in a range from 40 to 60°C.

The suspension obtained, if dried with a thermos balance at 65°C, leads to the formation of a compound which under X-ray can be seen to consist of gypsum (CaSO₄·2H₂O) and brochantite (CuSO₄·3Cu(OH)₂), with a molar ratio of the two crystalline phases of 3:1. This mixture of solid substances is commonly known as Bordeaux mixture.

This suspension is filtered, concentrated and used as raw material for formulation of the Bordeaux mixture in concentrated suspension.

Sodium polynaphthalene sulfonate at 6.70% by weight is added to the Bordeaux mixture, in paste. Subsequently xanthan gum is added, in concentrations ranging from 1-6 g/L, to obtain the desired viscosity preferably between 700 and 1200 cP. The copper titre is brought to 124 g/L by dilution with water.

The formulation dispersed by stirring vigorously for at least 40 minutes is then milled until obtaining particles having the desired size distribution.

In particular, on a sample of product effectively developed in the laboratory, the following reference values were obtained, analysed with the instrument Beckman Coulter Light Scattering LS 100:
99.99% particles with diameter smaller than 10 µm;
mean diameter = 1.508 µm.

### Example 2 - Study of the activity of the composition of the present invention against tomato blight and comparison with other copper-based products in the known art.

The study reports (1) the preventive activity against *Phytophthora infestans,* an agent that causes tomato blight, on tomato plants grown in pots in the greenhouse and (2) the rainfastness, evaluated both with biological analyses in the greenhouse and with spectrophotometric analyses.

The study was performed both with biological analyses performed in the greenhouse and by means of instrumental laboratory analyses.

### Protocol

The formulation of the present invention, the preparation of which is described in example 1, is compared with other copper-based commercial products. In order to compare the activities of all the formulations analysed, the maximum dosage tested of each formulation was calculated so as to apply 1 kg/ha of Cu (100g/100L), generally corresponding to the dose specified on the label.

### Biological analysis performed in the greenhouse on tomato plants in pots.

The analyses were performed in a greenhouse at 20-25°C and at a relative humidity of 50-80% with natural dark/light cycle. The Marmande tomato plants, prone to blight, were grown in pots.

The following methodology was used:
1. The plants were sprayed at the stage of 5-6 clusters with an atomizer using each product in table 2 at full dose, half dose and quarter dose. The products were sprayed both on the abaxial and abaxial surface of the leaf and then, after the treatment, left in a growth chamber to dry for 24 hours.
2. 24 hours after the treatment, part of the plants were rainwashed, using an artificial rainfall simulator (60 mm).
3. 24 hours after rainwashing, all the plants (also those not subject to rainwashing), were inoculated using a plastic manual sprayer with a suspension of *Phytophthora infestans* sporangia (approximately 35000 sporangia/ml) on the abaxial surface of the leaf.
4. After the appearance of the symptoms on the non-treated plants, approximately 72 hours after inoculation (HAI - hours after inoculation), the severity of the disease was evaluated visually estimating the percentage of symptoms for each plant.

Four replications were used for each treatment, each represented by a plant in a pot.

### Laboratory analyses

The rainfastness of the copper-based products was evaluated by means of spectroscopic analyses (FAAS) which quantify the residual copper present on the plants subject or not to runoff. The plants were sprayed and, after 24 hours, subjected to artificial rain using the same methodology as above for the biological tests but without inoculation. After 24 hours from the artificial rain, clusters were cut (both those subject to runoff and those not subject to runoff) from each plant, placed in a paper bag, dried in the laboratory at 68°C for 48 hours and then subject to acid mineralization.

The copper was quantified by means of atomic absorption (FAAS) following the EEC standard method.

The quantity of Cu⁺⁺ in the different formulations was determined with an ion-sensitive electrode at pH = 4.8, the same as the tomato leaves.

**Table 2**

| | DOSE g/hl | Copper dose g/hl | **SEVERITY %** | | | Effectiveness % |
|---|---|---|---|---|---|---|
| | | | **1st test** | **2nd test** | **mean** | |
| Non-treated | - | | 100.00 | 95.63 | **97.82** | **0.00** |
| Bordeaux mixture invention | 800 | 100 | 8.10 | 16.25 | **12.18** | **88** |
| | 400 | 50 | 38.70 | 15.00 | **26.85** | **73** |
| Bordeaux mixture commercial | 500 | 100 | 54.40 | 11.88 | **33.14** | **67** |
| | 250 | 50 | 55.60 | 11.25 | **33.43** | **67** |
| Copper oxychloride 35 | 286 | 100 | 95.60 | 19.38 | **57.49** | **43** |
| | 143 | 50 | 95.60 | 23.75 | **59.68** | **40** |
| Copper oxychloride 20 | 500 | 100 | 71.90 | 34.38 | **53.14** | **47** |
| | 250 | 50 | 86.20 | 40.00 | **63.10** | **37** |
| Copper oxychloride WG | 268 | 100 | 65.60 | 21.88 | **43.74** | **56** |
| | 134 | 50 | 42.50 | 33.75 | **38.13** | **62** |
| Copper oxychloride SC | 400 | 100 | 60.00 | 18.13 | **39.07** | **61** |
| | 200 | 50 | 81.90 | 41.88 | **61.89** | **38** |
| Copper hydroxide | 334 | 100 | 51.20 | 15.63 | **33.42** | **67** |
| | 167 | 50 | 70.00 | 11.88 | **40.94** | **59** |
| Tribasic copper sulphate | 660 | 100 | 38.70 | 0.88 | **19.79** | **80** |
| | 330 | 50 | 75.00 | 12.50 | **43.75** | **56** |

In the above table, by the term "effectiveness" we mean the percentage of reduction of the disease with respect to the non-treated sample.

The term "severity" refers to the severity of the disease and indicates the percentage of diseased leaves. The lower the "severity" value, the more effective the formulation.

The term "Dose" refers to the dose of the formulation which is dissolved in water expressed in grams per hectolitre and then sprayed on the plants.

The term "Copper dose" represents the quantity of active ingredient provided by the formulation.

### Comments

From examination of table 2, it can be noted that the best performance is given by the Bordeaux mixture of the invention which has the highest effectiveness value. Since the copper dose provided is the same for each formulation tested, it is evident that the only variable is not the active ingredient (i.e. the copper), but the formulation of the invention.

Since the Bordeaux mixture of the invention proved to be more effective than the commercial products, the object of the present invention has been achieved: greater effectiveness means obtaining at least the same result but with a lower quantity of copper.

## Claims

1. A Bordeaux mixture aqueous dispersion **characterized by**:
(i) a copper content from 50 to 200 g/litre,
(ii) a particle size distribution such that 99,99% of the dispersed particles have a mean diameter lower than 10 µm and, related to all particles, the mean diameter is from 1.3 to 1.7µm,
said Bordeaux mixture aqueous dispersion further comprising dispersing agents.

2. The Bordeaux mixture aqueous dispersion according to claim 1, **characterized by** a copper content of 100 to 150 g/litre, preferably of 124 g/litre.

3. The aqueous dispersion according to claim 1, wherein the viscosity is from 500 to 2000cP, preferably from 700 to 1200cP.

4. The aqueous dispersion according to claim 1, wherein the dispersing agents are sodium or ammonium polynaphthalene sulfonate and lignosulfonate, and mixtures thereof, from 2% by weight to 10% by weight, preferably from 4% by weight to 8% by weight.

5. The aqueous dispersion according to claim 1, further comprising:
(i) viscosity regulators as xanthan gum from 0 to 10g/litre, preferably from 1 to 6 g/litre, and
(ii) bentonite and/or attapulgite from 0 to 6% by weight, preferably from 0.3 to 3% by weight

6. Process for preparing an aqueous dispersion according claims 1 to 5, said process comprising the following steps:
a) preparing a water solution of copper sulphate pentahydrate CuSO₄·5H₂O,
b) neutralising the water solution of copper sulphate pentahydrate with water calcium hydroxide to a pH 4.1 to 4.4, preferably 4.2 - 4.3, so obtaining a water dispersion of Bordeaux mixture,
c) filtering the Bordeaux mixture of step (b) and obtaining a wet filter cake of Bordeaux mixture,
d) adding one or more dispersing agents to the wet filter cake of step (c) and making homogenous the so obtained dispersion,
e) wet-milling the filter cake containing dispersing agents from step (d) up to obtaining that:
(i) 99,99% of the dispersed particles have a mean diameter lower than 10 µm;
(ii) the mean diameter, related to all particles, is from 1.3 to 1.7 µm.

7. Process according to claim 6, wherein in step (d) further additives selected in the group comprising viscosity regulators and bentonite and/or attapulgite are added.

8. Process according claim 6, wherein the wet filter cake from step (c) consists of about 60% solid, the remaining being water.

9. Non-therapeutic use of the Bordeaux mixture aqueous dispersion according to claims 1 to 5 against bacteria, apple scab, wood cancer, mildew, rust, pitting, alternaria, phytophtora, downy mildew, spilocea, taphrina.

10. Use according to claim 9, wherein the Bordeaux mixture aqueous dispersion containing 124 g/litre of copper from Bordeaux mixture is used in a quantity of from about 2 to about 12 litres/ha.

## Patentansprüche

1. Die wässrige Dispersion einer Bordeaux-Mischung, **gekennzeichnet durch**:
(i) Einen Kupfergehalt von 50 bis 200 g/Liter
(ii) Eine Partikelgrößenverteilung, die so beschaffen ist, dass 99,9% der dispergierten Partikel einen durchschnittlichen Durchmesser aufweisen, welcher unter 10 µm liegt und der durchschnittliche Durchmesser in Bezug auf die Partikel jeweils 1.3 bis 1.7 µm beträgt, wobei die genannte wässrige Dispersion der Bordeaux-Mischung desweiteren Dispergiermittel enthält.

2. Die wässrige Dispersion der Bordeaux-Mischung gemäß Anspruch 1, **gekennzeichnet durch** einen Kupfergehalt von 100 bis 150 g/Liter, und zwar vorzugsweise 124 g/Liter.

3. Die wässrige Dispersion gemäß Anspruch 1, wobei die Viskosität jeweils von 500 bis 2000 cP beträgt, und zwar vorzugsweise von 700 bis 1200 cP.

4. Die wässrige Dispersion gemäß Anspruch 1, wobei die Dispergiermittel Natrium- oder Ammonium-Polynaphtalinsulfonat und Ligninsulfonat sowie deren Mischungen sind, von 2% an Gewicht bis 10% an Gewicht, und zwar vorzugsweise von 4% an Gewicht bis 8% an Gewicht.

5. Die wässrige Dispersion gemäß Anspruch 1, welche desweiteren folgendes umfasst:
(i) Viskositätsregler wie Xanthangummi von 0 bis 10 g/Liter, und zwar vorzugsweise von 1 bis 6 g/Liter, und
(ii) Bentonit und/oder Attapulgit von 0 bis 6% an Gewicht, und zwar vorzugsweise von 0.3 bis 3% an Gewicht.

6. Ein Verfahren zur Herstellung einer wässrigen Dispersion gemäß den Ansprüchen von 1 bis 5, wobei das genannte Verfahren jeweils folgende Schritte umfasst:
a) Die Herstellung einer Wasserlösung aus Kupfersulfat-Pentahydrat CuSO₄5H₂O
b) Neutralisierung der Wasserlösung aus Kupfersulfat-Pentahydrat mit Wasserkalziumhydroxid auf einen pH-Wert von 4.1 bis 4.4, und zwar vorzugsweise 4.2 - 4.3, wodurch die wässrige Dispersion einer Bordeaux-Mischung gewonnen wird.
c) Filtrierung der Bordeaux-Mischung von Schritt b) und Gewinnung eines nassen Filterrückstands der Bordeaux-Mischung.
d) Zugabe von einem oder mehreren Dispergiermitteln zu dem nassen Filterrückstand von Schritt c) und Homogenisierung der so gewonnenen Dispersion,
e) Nassvermahlung des Dispergiermittel enthaltenden Filterrückstands aus Schritt d), bis erzielt wird, dass
(i) 99,99% der dispergierten Partikel einen durchschnittlichen Durchmesser aufweisen, der unter 10 µm liegt;
(ii) der durchschnittliche Durchmesser in Bezug auf alle Partikel jeweils von 1,3 bis 1,7 µm beträgt.

7. Ein Verfahren gemäß Anspruch 6, wobei in Schritt d) weitere Zusätze zugesetzt werden, die aus Viskositätsregler und Bentonit und/oder Attapulgit enthaltenden Gruppe gewählt werden.

8. Ein Verfahren gemäß Anspruch 6, wobei der nasse Filterrückstand aus Schritt c) aus ungefähr 60% Feststoff besteht und der Rest Wasser ist.

9. Nichttherapeutische Anwendung der wässrigen Dispersion der Bordeaux-Mischung gemäß den Ansprüchen von 1 bis 5 gegen Bakterien, Apfelschorf, Holzkrebs, Schimmelpilz, Rost, Lochfraß, Alternaria, Phytophtora, falschen Mehltau, Spilocaea, Taphrina.

10. Anwendung gemäß Anspruch 9, wobei die wässrige Dispersion der Bordeaux-Mischung, welche 124 g/Liter an Kupfer von der Bordeaux-Mischung enthält, in einer Menge von ungefähr 2 bis ungefähr 12 Liter/ha verwendet wird.

## Revendications

1. Dispersion aqueuse de bouillie bordelaise **caractérisée par**:
(i) une teneur en cuivre de 50 à 200 g/litre,
(ii) une distribution granulométrique telle que 99,99% des particules dispersées ont un diamètre moyen inférieur à 10 µm et, concernant toutes les particules, le diamètre moyen est de 1,3 à 1,7 µm,
ladite dispersion aqueuse de bouillie bordelaise comprenant en outre des agents de dispersion.

2. Dispersion aqueuse de bouillie bordelaise selon la revendication 1, **caractérisée par** une teneur en cuivre de 100 à 150 g/litre, de préférence de 124 g/litre.

3. Dispersion aqueuse selon la revendication 1, où la viscosité est de 500 à 2000 cP, de préférence de 700 à 1200 cP.

4. Dispersion aqueuse selon la revendication 1, où les agents de dispersion sont des sulfonates et lignosulfonates de polynaphtalène d'ammonium ou de sodium, et des mélanges de ceux-ci, de 2% en poids à 10% en poids, de préférence de 4% en poids à 8% en poids.

5. Dispersion aqueuse selon la revendication 1, comprenant en outre:
(i) des régulateurs de viscosité comme de la gomme xanthane de 0 à 10g/litre, de préférence de 1 à 6 g/litre, et
(ii) de la bentonite et/ou de l'attapulgite de 0 à 6% en poids, de préférence de 0,3 à 3% en poids.

6. Processus de préparation d'une dispersion aqueuse selon les revendications 1 à 5, ledit processus comprenant les étapes suivantes:
a) préparer une solution aqueuse de pentahydrate de sulfate de cuivre CuSO₄5H₂O,
b) neutraliser la solution aqueuse de pentahydrate de sulfate de cuivre avec de l'hydroxyde de calcium aqueux à un pH de 4.1 à 4.4, de préférence 4.2 - 4.3, pour obtenir une dispersion aqueuse de bouillie bordelaise,
c) filtrer le bouillie bordelaise de l'étape (b) et obtenir un gâteau de filtre humide de bouillie bordelaise,
d) additionner un ou plusieurs agents de dispersion au gâteau de filtre humide de l'étape (c) et rendre homogène la dispersion ainsi obtenue,
e) broyer per voie humide le gâteau de filtre contenant des agents de dispersion de l'étape (d) jusqu'à obtenir que :
(i) 99,99% des particules dispersées ont un diamètre moyen inférieur à 10 µm ;
(ii) le diamètre moyen, concernant toutes les particules, est de 1,3 à 1,7 µm.

7. Processus selon la revendication 6, où à l'étape (d) d'autres additifs choisis dans le groupe comprenant des régulateurs de viscosité et de la bentonite et/ou de l'attapulgite sont ajoutés.

8. Processus selon la revendication 6, où le gâteau de filtre humide de l'étape (c) consiste en 60% environ de solide, le restant étant de l'eau.

9. Usage non thérapeutique de la dispersion aqueuse de bouillie bordelaise selon les revendications 1 à 5 contre les bactéries, la tavelure du pommier, le cancer du bois, l'oïdium, la rouille, le bois strié, l'alternaria, le phytophtora, le mildiou, la spilocea, la taphrina.

10. Usage selon la revendication 9, où la dispersion aqueuse de bouillie bordelaise contenant 124 g/litre de cuivre de bouillie bordelaise est utilisée en une quantité allant d'environ 2 à environ 12 litres/ha.
